# EUROPEAN PATENT SPECIFICATION

(11) **EP 1 707 259 B1**
(45) Date of publication and mention of the grant of the patent: **06.06.2018**
(21) Application number: 05007150.5
(22) Date of filing: 01.04.2005
(51) Int. Cl.: B01J 8/04, B01J 8/06

(54) **Process for the heterogeneous synthesis of chemical compounds**
Verfahren zur heterogenen Synthese von chemischen Komponenten
Procédé pour la synthèse hétérogène de composés chimiques

(43) Date of publication of application: 04.10.2006
(73) Proprietor: CASALE SA, 6900 Lugano (CH)
(72) Inventor: Filippi, Ermanno, 6976 Castagnola (CH); Tarozzo, Mirco, 6853 Ligornetto (CH); Rizzi, Enrico, 22070 Casnate con Bernate (CO) (IT)
(74) Representative: Zardi, Marco

(56) References cited:
- EP-A- 1 080 778
- EP-A- 1 153 653
- EP-A- 1 221 339
- EP-A- 1 477 220
- DE-B- 1 142 586
- FR-A- 1 480 125
- US-A- 4 180 543
- US-A- 4 372 920

## Description

### Field of application

In its more general aspect, the present invention relates to a process for the heterogeneous synthesis of chemical compounds, such as methanol and ammonia.

In particular, the present invention concerns a process of the aforesaid type, comprising at least two zones of reaction connected in series in which the required chemical reactions are conducted in the presence of an appropriate catalyst.

### Prior art.

As it is known, in the field of heterogeneous catalytic reactions for industrial synthesis of chemical products such as ammonia, methanol, formaldehyde and styrene, there is an ever-growing need for increasing the production capacity and the conversion yield, while at the same time, reducing energy consumption, installation costs, operating verification and maintenance costs.

With this aim in mind, various reactors have been proposed in the prior art for instance the document US4372920 discloses a fully adiabatic process, the document EP1221339 discloses an isothermal process and the document EP1080778 discloses an adiabatic process with intermediate cooling. This includes a plurality of adiabatic catalyst beds arranged in series forming the reaction zones. Reagent gases are made to cross the catalyst beds in appropriate temperature and pressure conditions so as to obtain together with the aid of the catalyst the conversion into the final products. Since the reaction is conducted in substantially adiabatic conditions, in other words, without heat removal, in the case of exothermic reactions the reaction heat tends to increase the operating temperature of the adiabatic beds, thus contrasting the reaction's progress towards equilibrium. Therefore the aforesaid reactors are generally equipped with direct heat exchange cooling means positioned between the adiabatic beds so that the temperature conditions of the reaction mixtures coming from said catalytic beds are brought back to temperature conditions which are more appropriate for the course of the reaction, for example by means of mixing with a portion of "fresh" reagent gas.

Even though this method is advantageous under certain aspects, the aforesaid reactors have a recognized limit in the level of reaction progress (conversion yield) that generally results as being fairly low and therefore not particularly convenient for an industrial application. Consequently the production capacity of said reactors also results as being low.

In the prior art various reactors have also been proposed comprising one or more catalytic beds (reaction zones) arranged in series and each one operating in pseudo-isothermal conditions by immersing indirect heat exchange means in the catalytic beds, such as plate type heat exchangers.

The term "pseudo-isothermal condition" means that the reaction temperature is controlled in the reaction zone(s) within a limited interval of values around a pre-determined optimal value (variable according to the required conversion reaction) through the additional use of said heat exchange means.

Although the aforesaid reactors are advantageous from the viewpoint of production capacity and reaction yield, because the conversion reaction of the reagent gases in the final products is constantly conducted in the catalytic beds within controlled temperature values, said reactors require equipment for industrial application (reactors) that compared to the aforesaid adiabatic beds reactors, result as being far more complex from a constructive viewpoint and involve far higher operating, installation and maintenance costs.

The technical problem underlying the present invention is that of providing a process for heterogeneous synthesis of chemical compounds that is able to satisfy in the most efficient manner the aforesaid necessities at the same time. In other words a reactor for heterogeneous synthesis of chemical compounds able to guarantee high conversion yields and production capacity, but which allows reducing at the same time, at industrial level, the construction, installation, operating, and maintenance costs.

### Summary of the invention.

Said problem is solved according to the invention by a process for heterogeneous synthesis of chemical compounds in accordance with claim 1 and the subsequent claims.

It has been surprisingly found out that with a process using a reactor having the aforesaid configuration it is possible to obtain high conversion yield of the reagent gas into the final products, said conversion yield being totally comparable with that obtained by a conventional reactor having the same capacity and with pseudo-isothermal catalytic beds. At the same time, the said reactor is simpler to construct and therefore requires less manufacture, installation and maintenance costs when compared to those required by a correspondent reactor with pseudo-isothermal catalytic beds. Costs, which are only slightly higher than those required for a correspondent reactor with adiabatic beds.

The features and advantages of the present invention will result much clearer from the detailed description of a chemical reactor, in particular for the production of methanol, provided below with reference to the appended drawings by way of example, only given for indicating and not limiting purposes.

### Brief description of the figures

- Figure 1 shows a schematic longitudinal section view of a chemical reactor

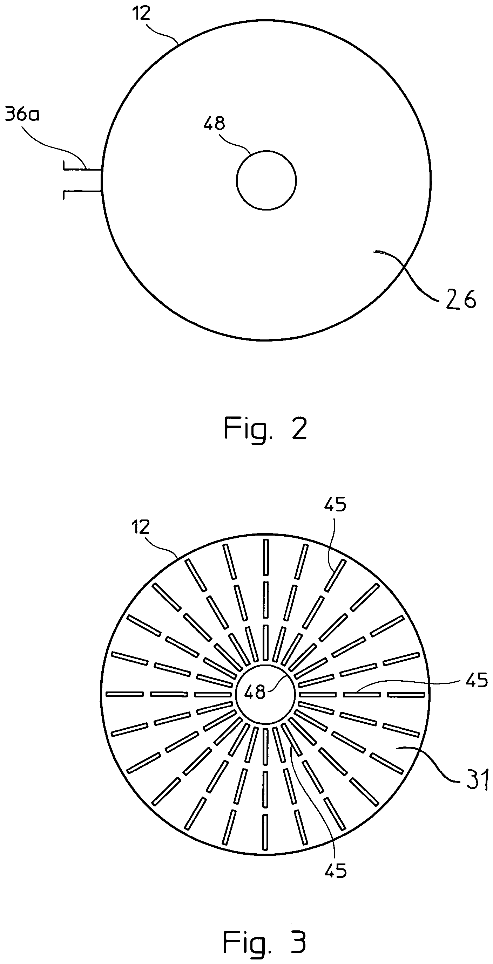

- Figure 2 shows a schematic transversal section view of the chemical reactor of figure 1, taken according to the trace plane B-B shown in figure 1,
- Figure 3 shows a schematic transversal section view of the chemical reactor of figure 1, taken according to the trace plane C-C shown in figure 1.

### Detailed description of a preferred embodiment of the invention.

With reference to the aforesaid figures, a chemical reactor for heterogeneous catalytic reactions, in particular for the production of methanol, is generally identified by the reference sign 10.

The chemical reactor comprises a shell 12 having a substantially cylindrical shape with a vertical axis A-A, and closed at both opposite ends by two bottoms, lower 14 and upper 16, respectively. On the upper bottom 16 a nozzle 17 is provided for the inlet into the reactor 10 of the reagent gases, while a nozzle 18 is provided on the lower bottom 14 to discharge the reaction mixture from the reactor 10. The reactor 10 comprises in an upper portion 20 thereof, in the present embodiment corresponding to approximately half of its volume, a plurality of reaction zones 22, 23, and 24, operating in substantially adiabatic conditions, and in a lower portion 21 thereof, a reaction zone 30 operating in pseudo-isothermal conditions.

More in particular, in the present embodiment, the reactor 10 comprises in its upper portion 20, three reaction zones arranged in series, and more precisely an upper reaction zone 22, an intermediate reaction zone 23, and a lower reaction zone 24, inside which are supported the respective catalytic beds: upper bed 25, intermediate bed 26 and lower bed 27, intended to be filled with a suitable catalyst.

The catalytic beds 25, 26, and 27 have a substantially annular section, and are supported in a coaxial manner, known in the art and thus not represented herein, inside said shell 12. They are arranged at a pre-determined distance from each other so as to define corresponding empty spaces 41 and 42 between each other. Furthermore, the upper catalytic bed 25 has an inlet side 25a for the inlet of the reagent gases coming from nozzle 17 and an opposite outlet side 25b of a reaction mixture. In a similar manner, the intermediate catalytic bed 26 and the lower catalytic bed 27 have corresponding inlet sides 26a and 27a for a reaction mixture coming from the upper catalytic bed 25 and the intermediate catalytic bed 26, respectively, and corresponding outlet sides 26b and 27b.

In the reaction zone 30 of the lower portion 21 of the reactor 10 a catalytic bed 31 is provided having a suitable catalyst positioned at a pre-determined distance from the lower catalytic bed 27 of the upper portion 20 of the reactor 10 thus defining an empty space 43. The catalytic bed 31 has a substantially annular section and is supported inside the shell 12 by an underlying bed 39 of an inert material. A grid 40 is also provided inside the reactor 10 over the reaction mixture outlet nozzle 18 to maintain the inert material in position inside the reactor.

The reactor 10 also comprises in its upper portion 20, cooling means 35 positioned in said space 41 between the upper catalytic bed 25 and the intermediate catalytic bed 26, and further cooling means 36 positioned in said space 42 between the intermediate catalytic bed 26 and the lower catalytic bed 27.

The cooling means 35 and 36 preferably comprise piping, preferably toroidal, having holes for the introduction into the empty spaces between adjacent catalytic beds of a cooling fluid (quench) fed from the exterior through inlet nozzles 35a and 36a, respectively. The toroidal piping of said cooling means is supported inside said shell 12 in a manner known in the art and therefore is not represented.

In accordance with a preferred embodiment of the invention, the cooling fluid is composed of "fresh" reagent gases, and the toroidal piping of said cooling means 35 and 36 are equipped with a plurality of nozzles (not shown) thus providing direct exchange through the mixing of said reagent gases with the reaction mixture coming from a respective catalytic bed 25 or 26 located upstream of the cooling means (quench). Each mixture is regulated in a suitable manner so as the resulting reaction mixture has a suitable temperature for correct course of the reaction in the following catalytic bed.

The reactor 10 also comprises cooling means globally indicated by the reference sign 44 immersed in the catalytic bed 31. Preferably said cooling means 44 comprise a plurality of indirect heat exchangers 45 of a conventional type, supported and distributed in a substantially annular portion of catalytic bed 31. The heat exchangers 45 are preferably of plate shaped, rectangular, box like, and even more preferably arranged in a radial manner with the long sides 45a parallel to the axis A-A of shell 12.

More in particular, each heat exchanger 45 is preferably made of two juxtaposition metal plates, mutually connected to each other at a pre-determined distance by means of suitable welding in order to provide an empty space between them with a pre-determined width to permit the flow of a heat exchange operating fluid.

Preferably, the heat exchangers 45 are in fluid communication in their upper part with a corresponding distributor pipe 46 of said heat exchanger fluid, and in their lower part with a corresponding outlet pipe 47 of said operating fluid.

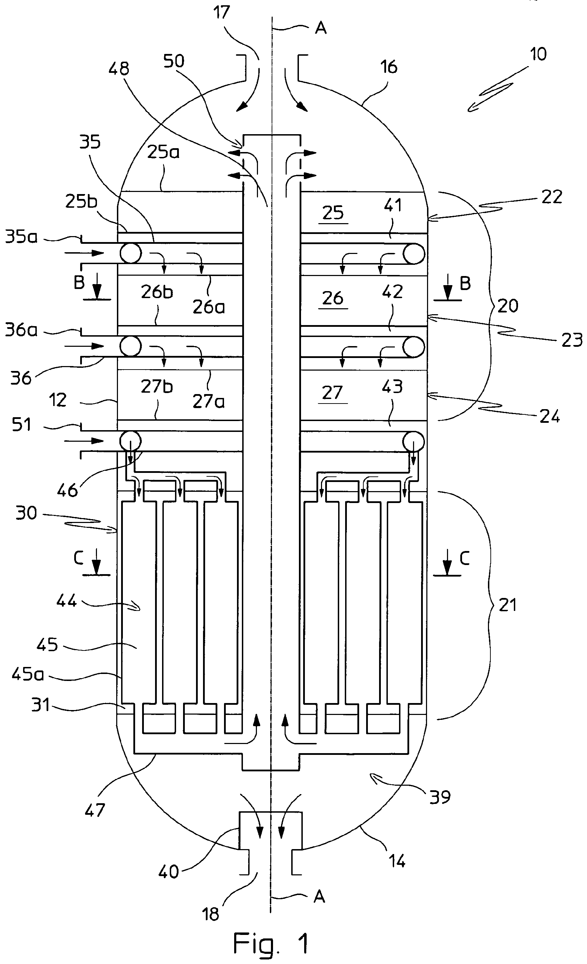

In the example shown in figure 1, the outlet pipes 47 are n fluid communication with a central manifold 48, substantially cylindrical in shape and coaxial with said shell 12; said manifold extends through the catalytic bed 31 from the lower portion 21 of the reactor 10 and through the catalytic beds 27, 26, and 25 of the upper portion 20 of the reactor, terminating above the upper catalytic bed 25 with a gas distributor 50.

The distributor pipes 46 are in fluid communication with an inlet nozzle 51 external to the shell 12 for the inlet of the heat exchange operating fluid.

According to an alternative embodiment of the present invention, the manifold 48 can also be positioned outside the reactor 10.

Preferably the heat exchange operating fluid comprises a portion of "fresh" reagent gases. It should be noted that in accordance with the invention, the reagent gases are advantageously pre-heated by the indirect heat exchange with the reaction mixture which crosses the catalytic bed 31, and for this reason they can be profitably supplied for conversion above the catalytic beds through the outlet pipes 47 and the manifold 48. This provides an advantageous reduction in energy consumption. The process according to the invention using the reactor 10 described above for the heterogeneous synthesis of chemical compounds, and in particular for the synthesis of methanol, is as follows.

One part of the reagent gases, for example a mixture comprising carbon monoxide and hydrogen in the case of methanol synthesis, is introduced into the reactor 10 through inlet nozzle 17 and possibly distributed in a uniform manner by means of a suitable distributor (not shown) on the upper catalytic bed 25. Therefore the reagent gases flow in said upper catalytic bed in a substantially axial direction obtaining a partial methanol conversion in substantially adiabatic conditions.

Therefore, at the outlet of the upper catalytic bed 25 a reaction mixture is obtained comprising methanol and non reacted gases which is cooled (quenched) by means of direct heat exchange, or in other words, by mixing with a suitable quantity of "fresh" reagent gases coming from the toroidal piping 35. The resulting reaction mixture after mixing action, then crosses the intermediate catalytic bed 26, where a further methanol conversion occurs, thus obtaining at the outlet of the intermediate catalytic bed 26 a reaction mixture that is even richer in methanol. Such a reaction mixture is cooled by "fresh" reagent gases supplied by the toroidal piping 36. The resulting reaction mixture after mixing action, then crosses the lower catalytic bed 27, where an even further methanol conversion occurs, thus obtaining at the outlet of said catalytic bed a reaction mixture that is even richer in methanol.

At this point, the reaction mixture coming from the lower catalytic bed 27 which then flows into the empty space 43, crosses the catalytic bed 31 in the lower portion 21, which is maintained in pseudo-isothermal conditions by means of indirect heat exchange with the heat exchangers 45. In this way, an efficient heat control and an optimal completing of the methanol conversion is obtained.

The portion of "fresh" reagent gases that crosses the heat exchangers 45 is advantageously pre-heated and is supplied above the upper catalytic bed 25 through the outlet pipe 44, the manifold 48 and the distributor 50, where it mixes with the portion of the reagent gases supplied to the reactor 10 through the inlet nozzle 17.

The reaction mixture coming from catalytic bed 31, crosses the inert material 39 and exits from outlet nozzle 18 of the reactor 10 to be sent on for subsequent processing stages (for example a methanol recovery section).

In addition to the advantages illustrated above, it should also be noted that the present invention is suitable for the revamping of pre-existing chemical reactors, and in particular conventional adiabatic bed reactors.

For said revamping, it is sufficient to replace only part of the adiabatic beds, in other words, those adiabatic beds in the lower portion of the reactor, and the corresponding cooling means with a pseudo-isothermal type catalytic bed. This results in a considerable reduction in revamping costs when compared to the replacement of all the adiabatic catalytic beds with pseudo-isothermal type beds, and at the same time provides a high reaction yield and a production capacity that is comparable with those of a corresponding reactor with pseudo-isothermal type beds.

### EXAMPLE

The features of production capacity of the reactor to be used in the process according to the invention in the field of methanol synthesis are compared with those of a corresponding conventional reactor with adiabatic catalytic beds, and with those of a corresponding reactor with pseudo-isothermal catalytic beds.

Methanol synthesis is carried out in each of the aforesaid reactors under the same operating conditions shown below:
- Composition of the supply gas (make-up gas) to the synthesis loop:

| | |
|---|---|
| CH4 | 3.12 mol% |
| N2 | 1.14mol% |
| H2 | 73.09 mol |
| Co2 | 7.98 mol% |
| CO | 14.67 mol% |

- Make-up gas flow rate to synthesis loop : 370'700 Nm³/h;
- Reactor operating pressure : 80 bar
- Total catalyst volume: 200m³
- Condensation temperature: 29°C

The comparison is performed on two cases, one in which the make-up gases to the synthesis loop are the gases produced by the steam reformer, and the other in which 500 MTD (metric tons per day) of carbon dioxide are added to the said gases produced by the steam reformer in order to increase production.

The gas flow rate at the inlet to the reactor remains practically unchanged in both cases: 1'800'000 Nm³/h.

The results are shown in the following tables 1 and 2:

**Table 1**

| Without addition of CO2 | Adiabatic catalytic bed reactor | Cooled catalytic bed reactor | Reactor according to the invention |
|---|---|---|---|
| Methanol production (MTD) | 2573 | 2653 | 2644 |
| Production increase compared to adiabatic catalytic bed reactor (MTD) | ---- | 80 | 71 |

**Table 2**

| With addition of 500 MTD of CO2 | Adiabatic catalytic bed reactor | Cooled catalytic bed reactor | Reactor according to the invention |
|---|---|---|---|
| Methanol production (MTD) | 2771 | 2955 | 2946 |
| Production increase compared to adiabatic catalytic bed reactor (MTD) | ---- | 184 | 175 |

The results shown in the tables above clearly demonstrate that the reactor has in both the cases under examination an overall production capacity and an increase in production compared to the corresponding adiabatic catalytic bed reactor that are only slightly lower than those of the cooled pseudo-isothermal catalytic bed reactor.

However, compared to the latter reactor, the reactor results as being far easier to manufacture and far more inexpensive because of its lower construction, installation and maintenance costs.

Of course, the man skilled in the art can bring numerous modifications and variants to the reactor for the heterogeneous synthesis of chemical compounds in order to satisfy specific and contingent requirements.

## Claims

1. A process of heterogeneous synthesis of chemical compounds, in particular methanol, wherein:
- the process is effected in a reactor comprising a substantially cylindrical shell (12) closed at the opposite ends by respective bottoms (14, 16);
- the process comprises a step of adiabatic conversion in at least one firstcatalytic bed (25, 26, 27) of said reactor, having a substantially annular section, coaxially supported inside said shell (12) in an upper portion (20) of said shell, said at least one catalytic bed (25, 26, 27) having an inlet side (25a, 26a, 27a) for the reagent gases or for a reaction mixture, and an outlet side (25b, 26b, 27b) for the reaction mixture,
- the process comprises a step of pseudo-isothermal conversion in a secondcatalytic bed (31) of said reactor, having a substantially annular section, supported inside said shell (12) in a lower portion (21) of said shell, coaxially positioned with respect to said at least one first catalytic bed and at a pre-determined distance therefrom, said second catalytic bed having an inlet side for a reaction mixture coming from said at least one first catalytic bed (25, 26, 27) and an outlet side for gaseous reaction products;
- a plurality of heat exchangers (45) being supported and distributed in a respective annular portion of said second catalytic bed (31), said heat exchangers (45) being flown by a heat exchanger operating fluid.

2. Process according to claim 1, wherein said at least one first catalytic bed comprises a plurality of first catalytic beds (25, 26, 27) arranged in series, the reactor also comprising means of direct heat exchange (35, 36) supported inside said shell (12) and arranged between the said first catalytic beds (25, 26, 27) to perform a direct heat exchange between a cooling fluid and a reaction mixture coming from a respective first catalytic bed (25, 26) .

3. Process according to claim 2, wherein said first catalytic beds (25, 26, 27) are arranged at a pre-determined distance from each other in order to define empty spaces (41, 42) between them, and wherein said means of direct heat exchange (35, 36) are arranged in said empty spaces (41, 42) between said first catalytic beds (25, 26, 27).

4. Process according to claim 3, wherein said means of direct heat exchange (35, 36) comprise at least one pipe, preferably toroidal, crossed by said cooling fluid and equipped with a plurality of holes to mix in a uniform manner a pre-defined quantity of said cooling fluid with a reaction mixture coming from an upstream respective catalytic bed (25, 26).

5. Process according to any one of the previous claims, wherein said plurality of heat exchangers (45) are plate type, box like and substantially rectangular in shape.

6. Process according to claim 5, wherein said heat exchangers (45) are in fluid communication with an operating fluid distributor pipe (46) and with an outlet pipe (47) for said operating fluid, respectively.

7. Process according to claim 6, wherein said outlet pipe (47) for said operating fluid is in fluid communication with a manifold (48) to supply said operating fluid over and above said at least one first catalytic bed (25).

8. Process according to claim 7, wherein said manifold (48) is substantially cylindrical in shape, positioned centrally in said reactor and coaxial with said shell (12), said manifold (48) crossing said second catalytic bed (31) and said at least one first catalytic bed (25, 26, 27).

9. Process according to claim 7, wherein said manifold (48) is in fluid communication with a distributor (50) positioned above said at least one first catalytic bed (25).

## Patentansprüche

1. Ein Verfahren der heterogenen Synthese von chemischen Verbindungen, insbesondere Methanol, wobei:
- das Verfahren in einem Reaktor mit einem im wesentlichen zylindrischen Gehäuse (12) erfolgt, das an den gegenüberliegenden Enden durch entsprechende Böden (14, 16) verschlossen ist;
- das Verfahren umfasst einen Schritt der adiabatischen Umwandlung in mindestens einem ersten katalytischen Bett (25, 26, 27) des genannten Reaktors, der im wesentlichen einen ringförmigen Abschnitt aufweist, der koaxial in dem Gehäuse (12) in einem oberen Teil (20) des Gehäuses gelagert ist, wobei das mindestens eine katalytische Bett (25, 26, 27) eine Einlassseite (25a, 26a, 27a) für die Reagenzgase oder für ein Reaktionsgemisch und eine Auslassseite (25b, 26b, 27b) für das Reaktionsgemisch hat,
- das Verfahren umfasst einen Schritt der pseudo-isothermischen Umwandlung in einem zweiten katalytischen Bett (31) des Reaktors mit im wesentlichen ringförmigem Querschnitt, der innerhalb des Gehäuses (12) in einem unteren Abschnitt (21) des Gehäuses gelagert ist, der koaxial in Bezug auf das mindestens eine erste katalytische Bett und in einem vorgegebenen Abstand davon angeordnet ist, wobei das zweite katalytische Bett eine Einlassseite für ein Reaktionsgemisch aufweist, das von dem mindestens einen ersten katalytisches Bett (25, 26, 27) stammt, und eine Auslassseite für gasförmige Reaktionsprodukte;
- eine Vielzahl von Wärmeaustauschern (45), die in einem jeweiligen ringförmigen Teil des zweiten katalytischen Betts (31) gelagert und verteilt sind, wobei die Wärmetauscher (45) von einer Wärmetauscher-Betriebsfluid gespeist werden.

2. Verfahren nach Anspruch 1, wobei das mindestens eine erste katalytische Bett eine Vielzahl von in Reihe angeordneten ersten katalytischen Betten (25, 26, 27) umfasst, wobei der Reaktor auch Einrichtungen zum direkten Wärmeaustausch (35, 36) umfasst, die innerhalb des Gehäuses (12) gelagert und zwischen den ersten katalytischen Betten (25, 26, 27) angeordnet sind, um einen direkten Wärmeaustausch zwischen einem Kühlfluid und einem Reaktionsgemisch durchzuführen, das aus einem jeweiligen ersten katalytischen Bett (25, 2 6) stammt.

3. Verfahren nach Anspruch 2, wobei die ersten katalytischen Betten (25, 26, 27) in einem vorbestimmten Abstand voneinander angeordnet sind, um Leerräume (41, 42) zwischen ihnen zu bilden, und wobei die Einrichtungen zum direkten Wärmeaustausch (35, 36) in den Leerräumen (41, 42) zwischen den ersten katalytischen Betten (25, 26, 27) angeordnet sind.

4. Verfahren nach Anspruch 3, wobei die Einrichtungen zum direkten Wärmeaustausch (35, 36) mindestens ein vorzugsweise toroidales Rohr umfassen, das von dem Kühlfluid durchströmt und das mit einer Vielzahl von Löchern versehen ist, um eine vordefinierte Menge des Kühlfluids mit einem Reaktionsgemisch, das aus einem stromaufwärtigen jeweiligen katalytischen Bett (25, 26) stammt, gleichmäßig zu mischen.

5. Verfahren nach einem der vorhergehenden Ansprüche, wobei die Vielzahl von Wärmetauschern (45) plattenförmig, kastenförmig und im wesentlichen rechteckig ist.

6. Verfahren nach Anspruch 5, wobei die Wärmetauscher (45) in Fluidverbindung mit einem Betriebsfluid-Verteilerrohr (46) bzw. mit einem Auslassrohr (47) für die Betriebsfluid stehen.

7. Verfahren nach Anspruch 6, wobei das Auslassrohr (47) für das Betriebsfluid in Fluidverbindung mit einem Verteiler (48) steht, um das Betriebsfluid oberhalb des mindestens einen ersten katalytischen Bettes (25) zuzuführen.

8. Verfahren nach Anspruch 7, wobei der Verteiler (48) eine im wesentlichen zylindrische Form hat, mittig in dem Reaktor und koaxial zu dem Gehäuse (12) angeordnet ist, wobei der Verteiler (48) das zweite katalytische Bett (31) und das mindestens eine erste katalytische Bett (25, 26, 27) durchquert.

9. Verfahren nach Anspruch 7, wobei der Verteiler in Fluidverbindung mit einem Verteiler (50) steht, der oberhalb des mindestens einen ersten katalytischen Betts (25) angeordnet ist.

## Revendications

1. Un procédé de synthèse hétérogène de composés chimiques, en particulier de méthanol, dans lequel :
- le procédé est mis en oeuvre dans un réacteur comprenant une enveloppe sensiblement cylindrique (12) fermée aux extrémités opposées par des fonds respectifs (14, 16) ;
- le procédé comprend une étape de conversion adiabatique dans au moins un premier lit catalytique (25, 26, 27) dudit réacteur, présentant une section sensiblement annulaire, supportée coaxialement à l'intérieur de ladite enveloppe (12) dans une partie supérieure (20) de ladite enveloppe, ledit au moins un lit catalytique (25, 26, 27) ayant un côté d'entrée (25a, 26a, 27a) pour les gaz réactifs ou pour un mélange réactionnel, et un côté de sortie (25b, 26b, 27b) pour le mélange réactionnel,
- le procédé comprend une étape de conversion pseudo-isotherme dans un deuxième lit catalytique (31) dudit réacteur, présentant une section sensiblement annulaire, supporté à l'intérieur de ladite enveloppe (12) dans une partie inférieure (21) de ladite enveloppe, positionné coaxialement par rapport audit au moins un premier lit catalytique et à une distance prédéterminée de celui-ci, ledit deuxième lit catalytique ayant un côté d'entrée pour un mélange réactionnel provenant dudit au moins un premier lit catalytique (25, 26, 27) et un côté de sortie pour les produits de réaction gazeux ;
- une pluralité d'échangeurs de chaleur (45) supportés et répartis dans une partie annulaire respective dudit deuxième lit catalytique (31), lesdits échangeurs de chaleur (45) étant entraînés par un fluide de travail de l'échangeur de chaleur.

2. Procédé selon la revendication 1, dans lequel ledit au moins un premier lit catalytique comprend une pluralité de premiers lits catalytiques (25, 26, 27) agencés en série, le réacteur comprenant en outre des moyens d'échange de chaleur direct (35, 36) supportés à l'intérieur ladite enveloppe (12) et disposés entre lesdits premiers lits catalytiques (25, 26, 27) pour effectuer un échange de chaleur direct entre un fluide de refroidissement et un mélange réactionnel provenant d'un premier lit catalytique respectif (25, 26).

3. Procédé selon la revendication 2, dans lequel lesdits premiers lits catalytiques (25, 26, 27) sont disposés à une distance prédéterminée l'un de l'autre pour définir des espaces vides (41, 42) entre eux, et dans lequel lesdits moyens d'échange thermique direct (35, 36) sont disposés dans lesdits espaces vides (41, 42) entre lesdits premiers lits catalytiques (25, 26, 27).

4. Procédé selon la revendication 3, dans lequel lesdits moyens d'échange thermique direct (35, 36) comprennent au moins une conduite, de préférence torique, traversée par ledit fluide de refroidissement et présentant une pluralité de trous pour mélanger de manière uniforme une quantité prédéfinie dudit fluide de refroidissement avec un mélange réactionnel provenant d'un lit catalytique respectif amont (25, 26).

5. Procédé selon l'une quelconque des revendications précédentes, dans lequel ladite pluralité d'échangeurs de chaleur (45) est du type à plaque, en forme de boîte et de forme sensiblement rectangulaire.

6. Procédé selon la revendication 5, dans lequel lesdits échangeurs de chaleur (45) sont en communication de fluide avec un tuyau de distribution de fluide de travail (46) et avec un tuyau de sortie (47) pour ledit fluide de travail, respectivement.

7. Procédé selon la revendication 6, dans lequel ledit tuyau de sortie (47) dudit fluide de travail est en communication fluidique avec un collecteur (48) pour alimenter ledit fluide de travail par-dessus ledit au moins un premier lit catalytique (25) et au-dessus de celui-ci.

8. Procédé selon la revendication 7, dans lequel ledit collecteur (48) est de forme sensiblement cylindrique, positionné de façon centrale dans ledit réacteur et coaxial à ladite enveloppe (12), ledit collecteur (48) traversant ledit deuxième lit catalytique (31) et ledit au moins un premier lit catalytique (25, 26, 27).

9. Procédé selon la revendication 7, dans lequel ledit collecteur (48) est en communication de fluide avec un distributeur (50) positionné au-dessus dudit au moins un premier lit catalytique (25).
